# FASCICULE DE BREVET EUROPEEN

(11) **EP 1 724 153 B1**
(45) Date de publication et mention de la délivrance du brevet: **01.08.2012**
(21) Numéro de dépôt: 06290800.9
(22) Date de dépôt: 12.05.2006
(51) Int. Cl.: B60R 1/00, B60R 11/04, B60Q 1/00

(54) **Dispositif d'éclairage ou de signalisation de véhicule automobile**
Vorrichtung zur Beleuchtung oder Signalisierung für Kraftfahrzeug
Lighting or signalling device for vehicle

(30) Priorité: 20.05.2005 FR 0505117
(43) Date de publication de la demande: 22.11.2006
(73) Titulaire: VALEO VISION, 93012 Bobigny Cedex (FR)
(72) Inventeur: Ravier, Jean Paul, 94100 Saint Maur des Fosses (FR); Le Bars, Jean-Francois, 89275 Elchingen (DE); Reiss, Benoit, 95210 Saint Gratien (FR); Leleve, Joel, 93800 Epinay sur Seine (FR); Albou, Pierre, 75013 Paris (FR)

(56) Documents cités:
- EP-A- 0 945 305
- EP-A- 1 297 511
- EP-A- 1 515 293
- FR-A- 2 465 612
- US-A1- 2004 179 098
- US-A1- 2005 030 378

## Description

### Domaine de l'invention

La présente invention concerne les dispositifs de détection d'obstacles, plus particulièrement destinés à équiper les véhicules automobiles, pour prévenir le conducteur de leur présence dans le voisinage immédiat de ce véhicule ou de la route qu'il devra bientôt emprunter.

### État de la technique

On a déjà proposé de nombreux dispositifs pour résoudre ce problème d'assistance à la conduite de véhicules automobiles, adaptés à des conditions de mauvaise visibilité, et basés sur des systèmes d'imagerie comportant une ou plusieurs caméras à bord du véhicule.

Par exemple, les documents US-A-6 819 231 et US-A-6 222 447 proposent de disposer une ou plusieurs caméras à l'arrière ou sur les côtés d'un véhicule, pour offrir au conducteur une vue de l'arrière du véhicule ou du volume situé dans ce qu'il est convenu d'appeler l'angle mort, pour assister le conducteur dans ses manoeuvres, par exemple de stationnement.

Le document US-A-6 473 001 propose quant à lui de disposer une caméra à l'extrémité d'un bras extensible, à l'avant et/ou à l'arrière du véhicule. Sous la commande du conducteur, le bras se déplie et éloigne ainsi la caméra de l'avant ou de l'arrière du véhicule, de sorte que la caméra, orientée perpendiculairement à l'axe longitudinal du véhicule, puisse explorer latéralement les scènes situées de part et d'autre de l'avant ou de l'arrière du véhicule, un écran dans l'habitacle présentant ces scènes au conducteur. Lorsque les manoeuvres d'entrée ou de sortie de stationnement sont terminées et que le conducteur arrête le véhicule ou commence à prendre de la vitesse, le bras est replié en position de repos pour le préserver des chocs.

Le document FR-A-2 859 860 propose un dispositif de détection d'obstacles comportant un système d'imagerie stéréoscopique, incluant deux capteurs optiques intégrés dans les moyens d'éclairage ou de signalisation du véhicule, les capteurs étant ainsi éloignés de plus d'un mètre l'un de l'autre et fournissant une information sur l'obstacle qui se présente et sur sa distance à l'avant du véhicule.

Le document FR-A-2 848 935 décrit un procédé de détection de virages sur une route, comportant une caméra montée dans le véhicule, une unité de traitement des signaux d'images et un réseau de neurones, pour afficher sur un écran de visualisation les contours de la route située en avant du véhicule.

Dans le même esprit, le document FR-A-2 847 367 propose un dispositif de détermination de la distance de visibilité en avant d'un véhicule, utilisant une caméra montée dans le véhicule, une unité de traitement des signaux d'images et un écran de visualisation des résultats calculés par le dispositif à partir des données recueillies.

Le document EP 0 945 305 A décrit un dispositif selon le préambule de la revendication 1.

Il est ainsi connu de disposer une caméra dans un véhicule pour transmettre au conducteur, avec ou sans traitement des signaux d'images, des informations et/ou des alertes sur son environnement immédiat. Cependant, ces caméras sont dévolues à un type d'observation déterminé, et ne remplissent qu'une seule fonction. De plus, elles sont la plupart du temps disposées derrière le pare-brise, par exemple au niveau du rétroviseur central, et occupent ainsi un espace non négligeable dans le champ de vision du conducteur.

### Exposé de l'invention

La présente invention se place dans ce contexte et elle a pour but de proposer un dispositif de détection d'obstacles dans l'environnement du véhicule, comportant un système d'imagerie dont le capteur, par exemple une caméra, ne soit pas une gêne pour le conducteur, et puisse remplir plusieurs fonctions, et fournir à un afficheur situé dans l'habitacle des images vidéo de l'environnement du véhicule ou des images numériques ou des alertes obtenues après traitement des signaux d'images.

L'invention a donc pour objet un dispositif d'éclairage ou de signalisation de ce véhicule selon la revendication 1.

Selon la présente invention, le champ de vision du capteur peut être orienté sensiblement vers l'avant selon l'axe longitudinal du véhicule ou sensiblement latéralement selon l'axe transversal du véhicule.

Autres caractéristiques de la présente invention sont décrites dans la revendications dépendantes.

### Brève description des dessins

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1 représente une vue schématique de dessus de la partie avant d'un véhicule ;
- la Figure 2 représente une vue schématique d'un dispositif d'éclairage ou de signalisation du véhicule de la Figure 1, équipé d'un dispositif selon la présente invention, dans une première position ;
- la Figure 3 représente une vue schématique analogue à celle de la Figure 2, le dispositif de l'invention étant dans une deuxième position ;
- la Figure 4 représente une vue schématique d'un dispositif d'éclairage ou de signalisation du véhicule de la Figure 1, selon un deuxième mode de réalisation du dispositif selon la présente invention, dans une première position, et
- la Figure 5 représente une vue schématique analogue à celle de la Figure 4, le dispositif de l'invention selon ce mode de réalisation étant dans une deuxième position.

### Description détaillée de modes de réalisation de l'invention

Par convention, dans la présente description, on appelle « avant » la direction normale de progression du véhicule en marche avant, et « arrière » la direction opposée. Sur les Figures, l'avant est ainsi en bas de ces Figures et l'arrière en haut.

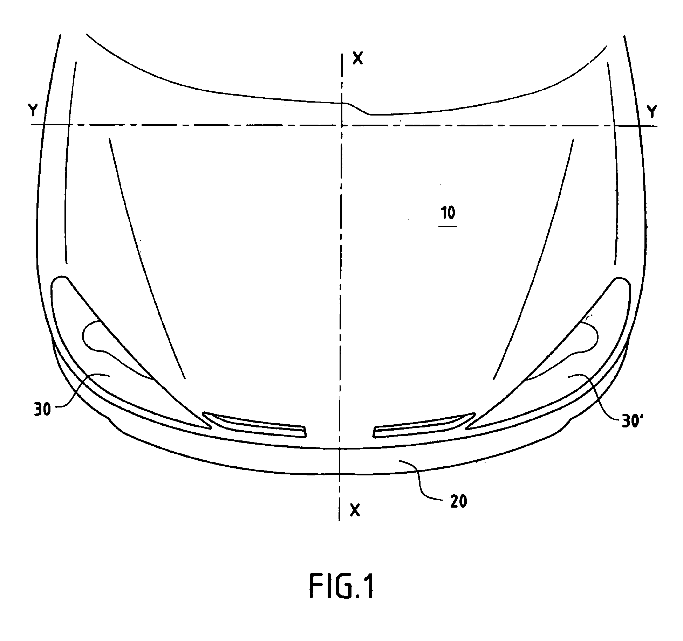

On a représenté schématiquement sur la Figure 1 l'avant d'un véhicule, d'axe longitudinal XX et d'axe transversal YY, et en particulier son capot avant 10, son pare-chocs ou bouclier 20, et ses dispositifs d'éclairage ou de signalisation droit et gauche 30 et 30' respectivement.

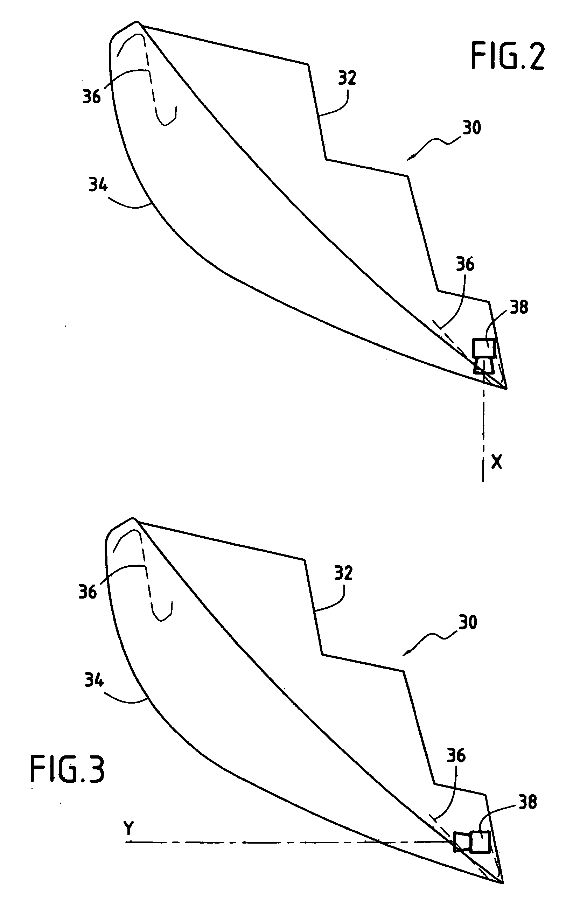

Conformément à la présente invention, un dispositif de détection d'obstacles est disposé sur ce véhicule, et plus précisément dans ses dispositifs d'éclairage ou de signalisation. On a représenté sur las Figures 2 à 5 l'un de ces dispositifs, par exemple le projecteur droit 30 du véhicule. Ce projecteur comporte un boîtier 32, une glace de fermeture 34, et des systèmes optiques (non représentés par souci de clarté) remplissant diverses fonctions réglementaires d'éclairage, comme l'émission de faisceaux lumineux de croisement, de route ou d'antibrouillard, et de signalisation, comme l'émission de faisceaux lumineux de circulation diurne, de changement de direction ou de veilleuse.

En ce qui concerne les faisceaux de croisement notamment, qui comportent une coupure, c'est à dire une limite supérieure au dessus de laquelle très peu de rayons lumineux sont émis, on a développé depuis plusieurs années des systèmes optiques capables de générer par eux-mêmes ces faisceaux à coupure, sans l'aide de stries sur la glace de fermeture 34. Celle-ci peut donc être lisse, c'est à dire non déviatrice ou faiblement déviatrice, et permet de voir de l'extérieur du projecteur tous ses composants. Il est donc courant d'utiliser un masque tel que 36, c'est à dire une pièce de style destinée à être intercalée entre les différents systèmes optiques pour dissimuler l'intérieur même du dispositif d'éclairage ou de signalisation. Un tel masque 36 est le plus souvent aluminé, de manière à s'harmoniser avec les réflecteurs des systèmes optiques.

L'utilisation d'une glace lisse est mise à profit dans la présente invention pour disposer derrière cette glace 34 un dispositif de détection d'obstacles 38 selon l'invention. Un tel dispositif de détection d'obstacles 38 est avantageusement constitué d'une caméra vidéo, mais peut aussi bien être constitué d'un capteur CCD ou CMOS. Le dispositif de détection d'obstacles 38 est ainsi disposé dans le dispositif d'éclairage ou de signalisation, derrière la glace lisse 34, et en partie dissimulé par le masque 36.

Dans une première position, représentée sur la Figure 2, le dispositif de détection d'obstacles 38 a son champ de vision orienté selon l'axe longitudinal XX du véhicule. Dans cette position, le dispositif de détection d'obstacles observe l'environnement devant du véhicule, et peut par exemple être utilisé pour former un système d'imagerie stéréoscopique, en association avec le capteur disposé dans le dispositif d'éclairage ou de signalisation situé symétriquement du côté gauche du véhicule, ou comme capteur d'un dispositif de détermination de la distance de visibilité en avant du véhicule.

Dans une deuxième position, représentée sur la Figure 3, le dispositif de détection d'obstacles 38 a son champ de vision orienté perpendiculairement à l'axe longitudinal du véhicule, c'est à dire selon l'axe YY. Dans cette position, le dispositif de détection d'obstacles 38 observe l'environnement du véhicule en avant et à droite de ce dernier. Il peut ainsi fournir au conducteur une information sur cet environnement, et l'aider ainsi dans ses manoeuvres d'entrée ou de sortie d'une place de stationnement. En effet, au sortir par exemple d'un garage, l'avant du véhicule doit être engagé d'environ la longueur de son capot avant que le conducteur puisse avoir la vision de l'espace dans lequel il a l'intention de s'engager. Des obstacles tels que des piétons ou d'autres véhicules circulant sur la voie perpendiculaire dans laquelle le véhicule s'engage peuvent n'être vus que très tardivement, ce qui peut se révéler être une manoeuvre dangereuse et résulter en des accidents matériels et corporels.

Le dispositif de détection d'obstacles 38 selon l'invention permet au conducteur d'apprécier cet environnement sur un écran de visualisation (non représenté), disposé dans l'habitacle, par exemple au tableau de bord, et de prendre les décisions adéquates bien avant d'en avoir la vision directe, c'est à dire alors que son véhicule est à peine engagé dans cette voie transversale : il peut continuer sa manoeuvre en toute sécurité ou il attend que l'obstacle soit sorti de l'environnement immédiat.

Pour passer de la première position à la deuxième position, le capteur 38 est monté mobile en rotation autour d'un axe vertical, et il est actionné par un moteur (non représenté), dont la commande peut se trouver sur le tableau de bord. Le moteur peut également être commandé de manière automatique, en fonction de la vitesse du véhicule : en dessous d'une vitesse prédéterminée, par exemple 5 km/h, le capteur 38 est dirigé selon l'axe YY. Au dessus de cette vitesse, le capteur 38 est automatiquement orienté selon l'axe XX.

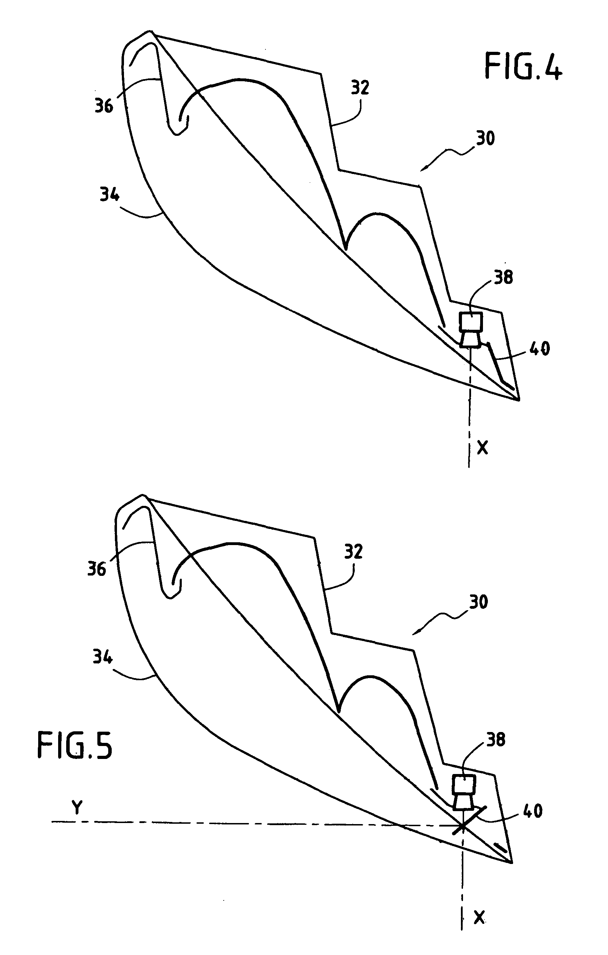

On a représenté sur les Figures 4 et 5 un deuxième mode de réalisation du dispositif de détection d'obstacles qui vient d'être décrit. Selon ce mode de réalisation, le capteur 38 est fixe par rapport au véhicule, et orienté par exemple selon l'axe longitudinal XX du véhicule, et un dispositif déviateur 40 est disposé devant le capteur 38. Un tel dispositif déviateur 40 a pour fonction de modifier l'orientation du champ de vision du capteur 38 en laissant ce dernier immobile.

Dans l'exemple représenté sur les Figures 4 et 5, un tel dispositif déviateur 40 est constitué d'un miroir basculant 40, disposé devant le capteur 38. Dans la première position représentée sur la Figure 4, le miroir 40 est escamoté, et le capteur 38 a une vision directe de l'environnement devant le véhicule.

Dans la deuxième position représentée sur la Figure 5, le miroir 40 a effectué une rotation de 45° autour d'un axe vertical, de manière à être situé devant le capteur 38, et que le champ de vision de ce dernier soit orienté selon l'axe YY. Comme dans le mode de réalisation précédent, la commande du basculement du miroir 40 pourra être manuelle à l'aide d'un interrupteur au tableau de bord, ou automatique en fonction de la vitesse du véhicule.

En variante, le dispositif déviateur 40 est fixe, et il est constitué d'un matériau électro-optique, passant d'un état réfléchissant à un état transparent sous l'effet d'un champ électrique. Le dispositif déviateur électro-optique 40 occupe alors la position fixe représentée sur la Figure 5.

Lorsque le dispositif électro-optique 40 est transparent, le champ de vision du capteur 38 est orienté selon l'axe longitudinal XX du véhicule, représenté par un trait mixte, et lorsque le dispositif électro-optique 40 est réfléchissant, le champ de vision du capteur 38 est orienté selon l'axe transversal YY du véhicule représenté en trait tireté.

On pourra bien sûr disposer le capteur 38 selon l'axe transversal YY du véhicule, de telle sorte que lorsque le dispositif électro-optique 40 est transparent, le champ de vision du capteur 38 est orienté selon l'axe transversal YY du véhicule, et lorsque le dispositif électro-optique 40 est réfléchissant, le champ de vision du capteur 38 est orienté selon l'axe longitudinal XX du véhicule.

Les informations fournies par le dispositif de détection d'obstacles pourront être différentes selon l'orientation du champ de vision du capteur 38 : lorsque son champ de vision est orienté selon l'axe transversal YY du véhicule, il pourra par exemple fournir une image vidéo de l'environnement latéral avant du véhicule, et lorsqu'il est orienté selon l'axe longitudinal XX du véhicule, il pourra donner des informations mises en forme par un système de traitement des signaux d'image fournis par le capteur 38. Cette différence de restitution au conducteur des signaux fournis par le capteur 38 pourra être assurée automatiquement en fonction de la direction de l'orientation du champ de vision.

On a donc bien réalisé un dispositif de détection d'obstacles dont le capteur n'est pas une gêne pour le conducteur, puisqu'il est placé dans les dispositifs d'éclairage ou de signalisation du véhicule. Un tel dispositif de détection d'obstacles peut remplir plusieurs fonctions : il fournit par exemple des images vidéo de l'environnement latéral avant du véhicule lorsque son champ de vision est orienté selon l'axe transversal YY du véhicule, et des informations ayant subi un traitement de signaux d'image lorsque le champ de vision du capteur est orienté selon l'axe longitudinal XX du véhicule.

De plus, étant situé dans les dispositifs d'éclairage ou de signalisation du véhicule, le capteur bénéficie de cette cohabitation : les inconvénients de la condensation rencontrés sur la face interne des pare-brise ou sur les objectifs des caméras sont simplement inexistants, les dispositifs d'éclairage ou de signalisation étant ventilés ou disposant de vernis anti-buée. Les projecteurs 30 et 30' peuvent être nettoyés de manière identique au pare-brise, grâce à des lave-projecteurs ; ainsi, les objectifs des caméras droite et gauche ne sont pas perturbés par des éventuelles salissures.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi que l'orientation du champ de vision du capteur pourra ne pas être rigoureusement parallèle ou perpendiculaire à l'axe transversal du véhicule, mais pourra être faiblement inclinée par rapport à cet axe et/ou à sa perpendiculaire. De même, dans le cas de l'utilisation d'un dispositif déviateur de l'orientation du champ de vision d'un capteur fixe par rapport au véhicule, la position de ce capteur par rapport au véhicule pourra être quelconque, seule important l'orientation de son champ de vision grâce au dispositif déviateur. Par exemple, le capteur pourra être disposé horizontalement, verticalement ou en toute autre position selon les contraintes d'encombrement.

## Revendications

1. Dispositif d'éclairage ou de signalisation (30, 30') de véhicule automobile intégrant un dispositif de détection d'obstacles comportant un système d'imagerie, incluant au moins un capteur optique (38), le champ de vision du capteur (38) pouvant être orienté sensiblement selon l'axe longitudinal (XX) du véhicule ou sensiblement selon l'axe transversal (YY) du véhicule quand le dispositif d'éclairage ou de signalisation (30, 30') est monté sur le véhicule,
**caractérisé en ce que**,
le capteur (38) est fixé par rapport au véhicule quand le dispositif d'éclairage ou de signalisation (30, 30') est monté sur le véhicule, et
un dispositif déviateur (40) est disposé devant le capteur (38),
le dispositif déviateur (40) est constitué d'un miroir basculant (40) monté mobile en rotation autour d'un axe vertical, entre une première position où il est escamoté, le champ de vision du capteur (38) étant orienté sensiblement selon l'axe longitudinal (XX) du véhicule et une deuxième position où il est incliné de 45 degrés par rapport à l'axe longitudinal du véhicule, le champ de vision du capteur (38) étant orienté sensiblement selon l'axe transversal (YY) du véhicule,
ou
le dispositif déviateur (40) est constitué d'un dispositif électro-optique (40) susceptible de passer d'un état réfléchissant à un état transparent sous l'effet d'un champ électrique.

2. Dispositif selon la revendication 1 **caractérisé en ce que** en position de montage dans l'état réfléchissant, le champ de vision du capteur (38) est orienté sensiblement selon l'axe transversal (YY) du véhicule, et **en ce que** dans l'état transparent, le champ de vision du capteur (38) est orienté sensiblement selon l'axe longitudinal (XX) du véhicule.

3. Dispositif selon la revendication 1, **caractérisé en ce que** en position de montage dans l'état transparent, le champ de vision du capteur (38) est orienté sensiblement selon l'axe transversal (YY) du véhicule, et **en ce que** dans l'état réfléchissant, le champ de vision du capteur (38) est orienté sensiblement selon l'axe longitudinal (XX) du véhicule.

4. Dispositif selon l'une quelconque des revendications précédentes, **caractérisé en ce que** le changement de l'orientation du champ de vision du capteur (38) s'effectue manuellement.

5. Dispositif selon l'une quelconque des revendications 1 à 3 **caractérisé en ce que** le changement de l'orientation du champ de vision du capteur (38) s'effectue automatiquement en fonction de la vitesse du véhicule.

6. Dispositif selon la revendication précédente, **caractérisé en ce que** en position de montage le champ de vision est orienté sensiblement selon l'axe transversal (YY) du véhicule pour une vitesse de celui-ci inférieure à une valeur prédéterminée, et **en ce que** le champ de vision est orienté sensiblement selon l'axe longitudinal (XX) du véhicule pour une vitesse de celui-ci supérieure à la valeur prédéterminée

7. Dispositif selon l'une quelconque des revendications précédentes, **caractérisé en ce que** le capteur (38) est une caméra vidéo.

8. Dispositif selon l'une quelconque des revendications 1 à 9, **caractérisé en ce que** le capteur (38) est un capteur CMOS ou CCD.

9. Dispositif selon l'une quelconque des revendications précédentes, **caractérisé en ce que** le capteur (38) est associé à un système de traitement des signaux d'image.

## Claims

1. Lighting or signalling device (30, 30') for a motor vehicle, incorporating a device for detection of obstacles comprising an imagery system, including at least one optical sensor (38), the field of vision of the sensor (38) being able to be oriented substantially according to the longitudinal axis (XX) of the vehicle or substantially according to the transverse axis (YY) of the vehicle, when the lighting or signalling device (30, 30') is fitted on the vehicle, **characterised in that** the sensor (38) is fixed relative to the vehicle when the lighting or signalling device (30, 30') is fitted on the vehicle, and a deflector device (40) is disposed in front of the sensor (38), the deflector device (40) consists of a tilting mirror (40) which is fitted such as to be mobile in rotation around a vertical axis, between a first position in which it retracted, the field of vision of the sensor (38) being oriented substantially according to the longitudinal axis (XX) of the vehicle, and a second position in which it is inclined by 45 degrees relative to the longitudinal axis of the vehicle, the field of vision of the sensor (38) being oriented substantially according to the transverse axis (YY) of the vehicle, or the deflector device (40) is constituted by an electro-optical device (40) which can go from a reflective state to a transparent state under the effect of an electric field.

2. Device according to claim 1, **characterised in that**, in the fitted position, in the reflecting state, the field of vision of the sensor (38) is oriented substantially according to the transverse axis (YY) of the vehicle, and **in that** in the transparent state, the field of vision of the sensor (38) is oriented substantially according to the longitudinal axis (XX) of the vehicle.

3. Device according to claim 1, **characterised in that**, in the fitted position, in the transparent state, the field of vision of the sensor (38) is oriented substantially according to the transverse axis (YY) of the vehicle, and **in that** in the reflecting state, the field of vision of the sensor (38) is oriented substantially according to the longitudinal axis (XX) of the vehicle.

4. Device according to any one of the preceding claims, **characterised in that** the change of orientation of the field of vision of the sensor (38) is carried out manually.

5. Device according to any one of claims 1 to 3, **characterised in that** the change of orientation of the field of vision of the sensor is carried out automatically according to the speed of the vehicle.

6. Device according to the preceding claim, **characterised in that**, in the fitted position, the field of vision is oriented substantially according to the transverse axis (YY) of the vehicle for a speed of the latter which is lower than a predetermined value, and **in that** the field of vision is oriented substantially according to the longitudinal axis (XX) of the vehicle for a speed of the latter which is higher than the predetermined value.

7. Device according to any one of the preceding claims, **characterised in that** the sensor (38) is a video camera.

8. Device according to any one of claims 1 to 9, **characterised in that** the sensor (38) is a CMOS or CCD sensor.

9. Device according to any one of the preceding claims, **characterised in that** the sensor (38) is associated with a system for processing of the image signals.

## Patentansprüche

1. Kraftfahrzeugbeleuchtungs- oder -signalgebungsvorrichtung (30, 30'), die eine Vorrichtung zur Hinderniserkennung mit einem Bildgebungssystem einschließt, die wenigstens einen optischen Sensor (38) beinhaltet, wobei das Blickfeld des Sensors (38) im Wesentlichen in der Längsachse (XX) des Fahrzeugs oder im Wesentlichen in der Querachse (YY) des Fahrzeugs ausgerichtet werden kann, wenn die Beleuchtungs- oder Signalgebungsvorrichtung (30, 30') in dem Fahrzeug eingebaut ist,
**dadurch gekennzeichnet, dass** der Sensor (38) in Bezug auf das Fahrzeug feststehend ist, wenn die Beleuchtungs- oder Signalgebungsvorrichtung (30, 30') in dem Fahrzeug eingebaut ist, und
eine Umlenkvorrichtung (40) vor dem Sensor (38) angeordnet ist,
die Umlenkvorrichtung (40) von einem schwenkbaren Spiegel (40) gebildet ist, der zwischen einer ersten Stellung, in der er weggeklappt ist, wobei das Blickfeld des Sensors (38) im Wesentlichen in der Längsachse (XX) des Fahrzeugs ausgerichtet ist, und einer zweiten Stellung, in der er um 45 Grad zur Fahrzeuglängsachse geneigt ist, wobei das Blickfeld des Sensors (38) im Wesentlichen in der Querachse (YY) des Fahrzeugs ausgerichtet ist, drehbeweglich um eine vertikale Achse montiert ist
oder
die Umlenkvorrichtung (40) von einer elektro-optischen Vorrichtung (40) gebildet ist, die unter der Einwirkung eines elektrischen Feldes von einem reflektierenden Zustand in einen lichtdurchlässigen Zustand zu wechseln vermag.

2. Vorrichtung nach Anspruch 1,
**dadurch gekennzeichnet, dass** in der Einbauposition das Blickfeld des Sensors (38) im reflektierenden Zustand im Wesentlichen in der Querachse (YY) des Fahrzeugs ausgerichtet ist, und dass das Blickfeld des Sensors (38) im lichtdurchlässigen Zustand im Wesentlichen in der Längsachse (XX) des Fahrzeugs ausgerichtet ist.

3. Vorrichtung nach Anspruch 1,
**dadurch gekennzeichnet, dass** in der Einbauposition das Blickfeld des Sensors (38) im lichtdurchlässigen Zustand im Wesentlichen in der Querachse (YY) des Fahrzeugs ausgerichtet ist, und dass das Blickfeld des Sensors (38) im reflektierenden Zustand im Wesentlichen in der Längsachse (XX) des Fahrzeugs ausgerichtet ist.

4. Vorrichtung nach einem der vorhergehenden Ansprüche,
**dadurch gekennzeichnet, dass** die Veränderung der Ausrichtung des Blickfeldes des Sensors (38) manuell erfolgt.

5. Vorrichtung nach einem der Ansprüche 1 bis 3,
**dadurch gekennzeichnet, dass** die Veränderung der Ausrichtung des Blickfeldes des Sensors (38) automatisch in Abhängigkeit der Fahrzeuggeschwindigkeit erfolgt.

6. Vorrichtung nach dem vorhergehenden Anspruch,
**dadurch gekennzeichnet, dass** in der Einbauposition das Blickfeld im Wesentlichen in der Querachse (YY) des Fahrzeugs ausgerichtet ist, wenn die Fahrzeuggeschwindigkeit unter einem vorbestimmten Wert liegt, und dass das Blickfeld im Wesentlichen in der Längsachse (XX) des Fahrzeugs ausgerichtet ist, wenn die Fahrzeuggeschwindigkeit über dem vorbestimmten Wert liegt.

7. Vorrichtung nach einem der vorhergehenden Ansprüche,
**dadurch gekennzeichnet, dass** der Sensor (38) eine Videokamera ist.

8. Vorrichtung nach einem der Ansprüche 1 bis 9,
**dadurch gekennzeichnet, dass** der Sensor (38) ein CMOS- oder CCD-Sensor ist.

9. Vorrichtung nach einem der vorhergehenden Ansprüche,
**dadurch gekennzeichnet, dass** der Sensor (38) einem Bildsignalverarbeitungssystem zugeordnet ist.
